# EUROPÄISCHE PATENTSCHRIFT

(11) **EP 0 746 971 B1**
(45) Veröffentlichungstag und Bekanntmachung des Hinweises auf die Patenterteilung: **01.12.1999**
(21) Anmeldenummer: 96101226.7
(22) Anmeldetag: 29.01.1996
(51) Int. Cl.: A01D 90/04, A01F 15/10

(54) **Rundballenpresse für Erntegut**
Round bale press for crop
Press à balles rondes pour produit agricole

(30) Priorität: 08.06.1995 DE 29509433 U
(43) Veröffentlichungstag der Anmeldung: 11.12.1996
(73) Patentinhaber: GREENLAND GMBH & CO. KG, D-78240 Gottmadingen (DE)
(72) Erfinder: Maier, Martin, Dipl.-Ing., 78244 Gottmadingen (DE)
(74) Vertreter: Grünecker, Kinkeldey, Stockmair & Schwanhäusser Anwaltssozietät

(56) Entgegenhaltungen:
- EP-A- 0 074 533
- EP-A- 0 341 508
- EP-A- 0 579 594
- WO-A-86/02802
- DE-A- 3 334 045

## Beschreibung

Die Erfindung betrifft eine Rundballenpresse gemäß dem Oberbegriff des Patentanspruchs 1 sowie ein Schneidwerk für eine Rundballenpresse gemäß dem Oberbegriff des Patentanspruchs 10.

Im Schneidwerk einer Rundballenpresse arbeitet ein mit Flügeln bestückter Rotor mit mehreren parallelen nebeneinander angeordneten Messern zusammen. Die Messer sind mit einem Messerträger in einem Schneidrahmen gehaltert, und zwar mit Hilfe von Federhebeln, die unter der Spannung von Zugfedern in Rastvertiefungen der Messerrücken eingreifen, so daß bei Durchgehen eines Fremdkörpers, z.B. eines Steines, getroffene Messer dank ausrastender Federhebel nachgeben können. Wird die Funktion "Schneiden des Ernteguts" nicht gewünscht bzw. zum Herausnehmen der Messer werden die Federhebel, z.B. mit einem Hydraulikzylinder, gegen die Zugfedern verschwenkt. Die Messer fallen dann unter ihrem Eigengewicht aus der Schneidposition in die Passivposition in den Schneidrahmen, in der sie mit dem Rotor außer Eingriff sind. Für verschiedene Futterarten bzw. Einsatzfälle werden unterschiedlich geformte Messer verwendet, z.B. "steile Messer" für einen extremen Schnitt bzw. "flache Messer" für einen weniger extremen Schnitt. Die bekannten Schneidwerke sind jeweils mit Messern einer Messerform ausgerüstet. Wird eine Umstellung auf eine andere Futterart bzw. einen anderen Einsatzfall erforderlich, dann müssen sämtliche Messer ausgetauscht werden. Dies ist nicht nur ein zeitraubender Arbeitsvorgang, sondern setzt beim Bediener beträchtliches Geschick voraus. Außerdem ist es erforderlich, mehrere Messersätze, gegebenenfalls auch auf dem Feld, bereitzuhalten. Solche Messersätze sind teuer.

Aus WO-A-86/02802, EP-A-0 579 594, DE-A-33 34 045 und EP-A-0 074 533 sind Ladewagen jeweils mit Schneidwerken bzw. Schneidwerke für Ladewagen bekannt. Bei dem aus WO-A-86/02802 bekannten Ladewagen sind die Messer aus einer vorbestimmten aktiven Schneidposition mittels einer Hilfsvorrichtung lösbar und in eine Austausch- oder Nachschleifposition außerhalb des Zuführweges verstellbar. Diese Stellung ist keine Schneidstellung mehr. Alternativ sind die Messer innerhalb der üblichen Sicherheitsfunktion bzw. Überlastfunktion durch den Druck des Ernteguts und/oder von gefährlichen, mitgeförderten Objekten aus der vorbestimmten, einzigen aktiven Schneidposition in eine zwischen der Schneidposition und der Austausch- oder Nachschleif-Position liegende Ausweichposition verstellbar. Die Ausweichposition ist keine aktive Schneidposition mehr, weil die Messer dann aus dem kooperativen Eingriff mit dem Rotor gelöst sind und durch Ausnehmungen in der Wand des Zuführweges aus dem Zuführweg herausverlagert sind. Die Entgegenhaltungen befassen sich nicht mit dem Problem, die Schnittart in Abhängigkeit von Futtersorten oder den Einsatzbedingungen zwischen extrem oder weniger extrem zu verändern. Auch gelten für Rundballenpressen und das darin verarbeitete Futter Anforderungen, die bei Ladewagen nicht gegeben sind.

Nächstliegender Stand der Technik wird in EP-A-0 341 508 gesehen. Der Oberbegriff der Ansprüche 1 und 10 wird durch die aus EP-A-0 341 508 bekannten Merkmalen gebildet.

Der Erfindung liegt die Aufgabe zugrunde, eine Rundballenpresse der eingangs genannten Art bzw. ein Schneidwerk für eine Rundballenpresse zu schaffen, die ohne Messertausch für verschiedene Futterarten bzw. Einsatzfälle verwendbar sind.

Die gestellte Aufgabe wird erfindungsgemäß mit den Merkmalen des Patentanspruchs 1 bzw. des Patentanspruchs 10 gelöst.

Bei einer Ausbildung wird derselbe Messersatz für verschiedene Futterarten bzw. Einsatzfälle verwendet. Der eingebaute Messersatz braucht nur zwischen den Schneidpositionen umgestellt zu werden. In der steilen Schneidposition ergibt sich ein extremer Schnitt; in der flacheren Schneidposition hingegen ein weniger extremer Schnitt. Der so verbreiterte Einsatzbereich des Schneidwerks bzw. der Rundballenpresse bedeutet eine beträchtliche Vereinfachung für den Landwirt, wobei die Sicherheitsfunktion des Nachgebens einzelner Messer bei einem Hindernis genauso erhalten bleibt, wie die Möglichkeit, sämtliche Messer außer Eingriff zu nehmen bzw. zum leichten Austauschen zu lösen, weil die Messer in der steilen und in der flacheren Schneidposition vom Messerträger lösbar und jeweils direkt und in dieselbe Passivposition verstellbar sind.

Bei der Ausführungsform gemäß Anspruch 2 wird nur die Schnittart verändert, wenn die Messer von einer Schneidposition in eine andere umgestellt werden. Dabei bleibt ihr kooperativer Eingriff mit dem Rotor aufrechterhalten. In beiden Schneidpositionen ist die Überlast- oder Sicherheitsfunktion gegeben, d.h. im Notfall werden die Messer aus der jeweiligen aktiven Schneidposition in die Ausweichposition verlagert, die jedoch eine andere Position ist, als jede aktive Schneidposition.

Bei der Ausführungsform gemäß Anspruch 3 ist die Umstellung der Messer zwischen den unterschiedlichen Schneidpositionen einfach und zügig vorzunehmen. In beiden Haltepositionen ist der Messerträger stabil abgestützt, so daß die beim Arbeiten auftretenden Kräfte von den Messern zuverlässig in den Schneidrahmen übertragen werden.

Eine besonders einfache Verstellung ist bei der Ausführungsform gemäß Anspruch 4 gegeben. Die Verstellung wird durch den Antrieb unterstützt. Ein hydraulischer oder elektrischer Antrieb läßt sich an der Rundballenpresse oder sogar vom Schlepper aus betätigen.

Die Ausführungsform gemäß Anspruch 5 ist besonders zweckmäßig, weil der Lösemechanismus zum Lösen der Messer aus der jeweiligen Schneidposition gleichzeitig auch die Funktion der Schwenkverstellung des Messerträgers übernimmt, wenn die Messer von einer Schneidposition in die andere umgestellt werden müssen.

Bei der Ausführungsform gemäß Anspruch 6 ergibt sich eine stabile Abstützung des Messerträgers in beiden Haltepositionen.

Besonders zweckmäßig ist die Ausführungsform gemäß Anspruch 7, weil die Endanschläge den Verstellvorgang unterstützen. Dabei ist zu berücksichtigen, daß bei der Verstellung des Messerträgers und der Messer beträchtliche Kräfte wirken können, die eine Grobpositionierung bis zum Festlegen des Messerträgers in der jeweiligen Halteposition erschweren können. Diese Kräfte werden zum Teil benutzt, um den Messerträger zunächst am jeweiligen Endanschlag zu halten, bis seine Halteteile ordnungsgemäß verriegelt bzw. festgelegt sind.

Die vorerwähnte Handhabung wird mit den Merkmalen des Anspruchs 8 weiter erleichtert. Die jeweils zu benutzende Befestigungsstelle wird durch die Anlage des Messerträgers am Endanschlag positioniert, ohne daß die Bedienungsperson noch mühsame Feineinstellungen vorzunehmen bräuchte.

Die in Anspruch 9 enthaltenen Winkelbereiche sind für die Praxis zweckmäßig.

Anhand der Zeichnungen wird eine Ausführungsform des Erfindungsgegenstandes erläutert. Es zeigen:
- Fig. 1: eine schematische Seiten- und Schnittansicht einer Rundballenpresse,
- Fig. 2: einen Ausschnitt einer Detailkonstruktion zu Fig. 1, mit einer steilen Schneidposition der Messer, und
- Fig. 3: eine Ansicht ähnlich der von Fig. 2 bei einer flacheren Schneidposition der Messer.

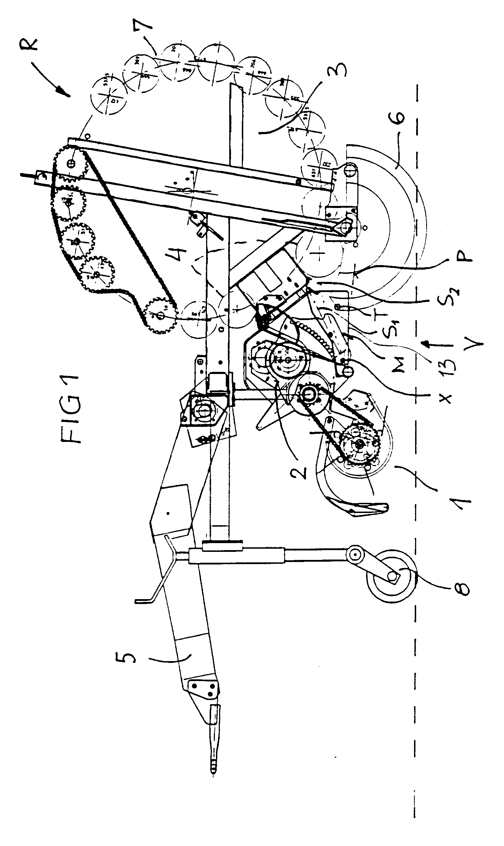

Eine Rundballenpresse R gemäß Fig. 1 weist im Zuführweg von einer Erntegut-Aufnahmevorrichtung 1 (Pick-up-Trommel) zu einer Preßkammer 3 ein Schneidwerk V auf. In dem Schneidwerk V ist ein drehantreibbarer Rotor 2 vorgesehen, der mit Flügeln bestückt ist, die das aufgenommene Erntegut an einer Reihe paralleler Messer M vorbei in die Preßkammer 3 fördern. In der Preßkammer 3 sind über den Umfang verteilte Wickel- oder Preßrollen 4 vorgesehen. Ein fertiggepreßter und gewickelter Rundballen kann nach Öffnen eines hinteren Tores 7 ausgeworfen werden. Die Rundballenpresse wird mit einer Deichsel 5 an ein Zugfahrzeug, z.B. einen Schlepper, angehängt und läuft auf Rädern 6. In der in Fig. 1 gezeigten Ruheposition steht die Rundballenpresse auf einer Standrolle 8, die im Betrieb eingezogen oder weggeklappt wird.

In dem Schneidwerk V sind die Messer M auf einer Halteachse X schwenkbar gelagert und durch einen Messerträger T gehaltert. Mittels des Messerträgers T lassen sich die Messer gemeinsam in einer steilen Schneidposition S1 oder einer flacheren Schneidposition S2 haltern. Ferner lassen sich die Messer M vom Messerträger T lösen, so daß sie unter dem Eigengewicht in eine abgeklappte Passivposition P verstellbar sind, in der sie außer Eingriff mit dem Rotor 2 sind. Die Halteachse X, der Messerträger T und die Messer M sind in einem Schneidrahmen 13 untergebracht, der in der Rundballenpresse R unterhalb des Rotors 2 angeordnet ist.

Ein praktikabler Verstellwinkel zwischen der steilen Schneidposition S1 und der flacheren Schneidposition S2 liegt zwischen 4° und 10°, vorzugsweise bei etwa 6°. Der Verstellwinkel zwischen der steilen Schneidposition S1 und der Passivposition liegt bei ca. 30°.

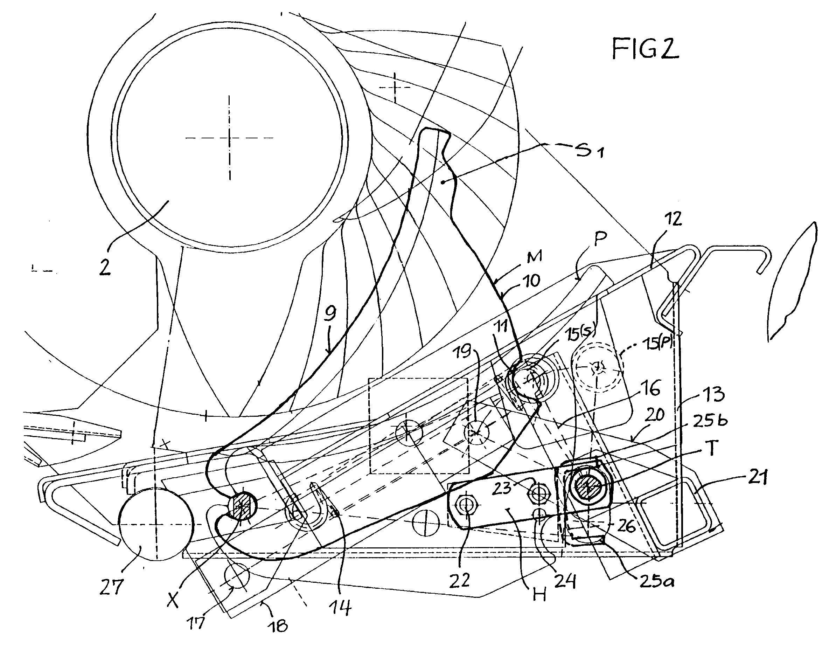

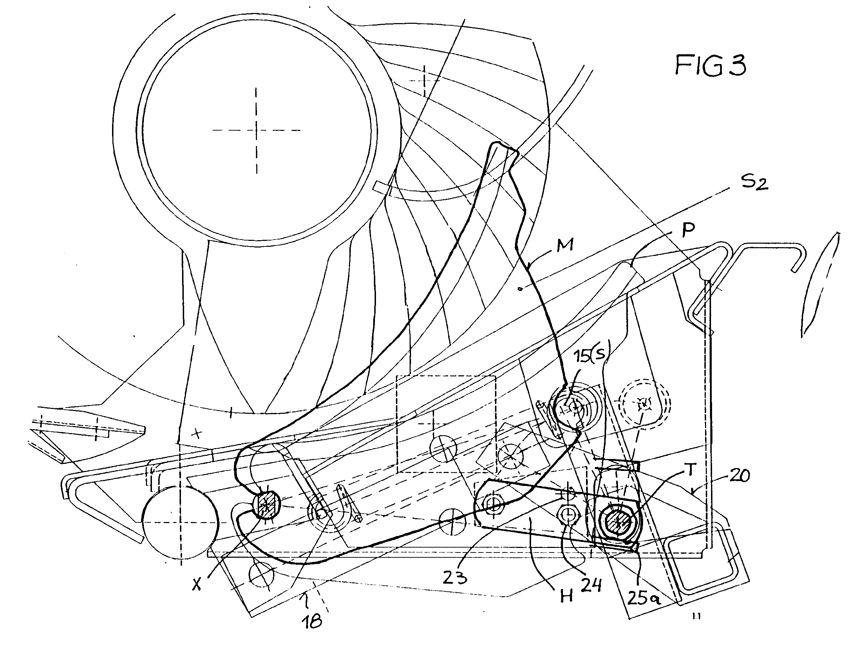

In Fig. 2 sind die Messer M (mit dunkel betontem Umriß) in der steilen Schneidposition S1 gehaltert, in der sie mit ihren Schneiden 9 mit dem Rotor 2 einen extremen Schnitt ausführen. Mit einem rückwärtigen Maul ist jedes Messer M auf der Halteachse X schwenkverstellbar abgestützt. Am unteren Ende eines Messerrückens 10 ist eine Rastvertiefung 11 eingeformt. Die Messer M sitzen in Schlitzen eines Bodens 12 des Schneidrahmens 13. In der Nähe der Halteachse X verankerte Zugfedern 14 beaufschlagen die oberen Enden von Federhebeln 16, deren jeder mit einem Eingriffselement 15 in eine Rastvertiefung 11 eingreift. Die Federhebel 16 sind auf dem Messerträger T schwenkbar gelagert, der als den Schneidrahmen 13 quer durchsetzende Achse ausgebildet ist. In Schwenklagern 17 sind Antriebe 18, z.B. Hydraulikzylinder, abgestützt, die in einem Gelenk 19 mit Schwenkhebeln 20 gekoppelt sind. Die Schwenkhebeln 20 sind durch einen Querträger 21 miteinander verbunden und auf dem Messerträger T schwenkbar. Der Messerträger T ist in Halteteilen H, z.B. Flacheisenabschnitten, angebracht, die im Schneidrahmen 13 an einer vorderen Befestigungsstelle 22 und einer hinteren Befestigungsstelle 23 festgelegt sind. Zur Befestigung dienen bei der gezeigten Ausführungsform Schrauben mit Muttern. Für die Schraube in der Befestigungsstelle 23 ist eine weitere Befestigungsstelle 24 vorgesehen, die in Fig. 2 nicht benutzt wird, hingegen in Fig. 3 zum Festlegen des Halteteils in seiner Halteposition für die flachere Schneidposition S2 benutzt wird.

Es ist denkbar, anstelle der Befestigungsstellen 23 und 24 einen Stellexzenter oder eine andere Art einer Verriegelung zu wählen, die es ermöglicht, die Halteteile H in den beiden Haltepositionen (Fig. 2 und 3) unverrückbar festzulegen und gegebenenfalls zwischen den beiden Haltepositionen zu verstellen.

Im Schneidrahmen 13 ist ein bei dieser Ausführungsform C-förmiges Element 26 stationär festgelegt, das zwei Endanschläge 25a und 25b für die beiden Positionen des Messerträgers T (Fig. 2 und 3) trägt, wobei die Endanschläge 25a und 25b eine Grobpositionierung des Messerträgers bei der Umstellung sicherstellen. Mit 27 ist ein quer durchgehendes Versteifungsrohr des Schneidrahmens 13 angedeutet.

Ferner ist in Fig. 2 strichliert gezeigt, wie unter dem Einfluß des Hydraulikzylinders 18 die Eingriffselemente 15 aus ihren Positionen 15 (S) in Lösepositionen 15 (P) verstellbar sind, damit die Messer M unter ihrem Eigengewicht in die Passivposition P fallen können, in der sie auf dem Boden 12 des Schneidrahmens 13 aufliegen und mit dem Rotor 2 außer Eingriff sind.

In Fig. 3 sind die in ihren Umrissen dunkel hervorgehobenen Messer M in der gegenüber Fig. 2 flacheren Schneidposition S2. Der Messerträger T ist bis an den unteren Endanschlag 25a verstellt. Die Halteteile H sind in den Befestigungsstellen 24 festgelegt. Die Eingriffselemente 15 liegen in den Rastvertiefungen 11. Auch aus der flacheren Schneidposition S2 läßt sich jedes Messer M durch Ausheben des Eingriffselementes 15 in die Passivposition P verstellen.

Zum Umstellen der Messer M aus der steilen Schneidposition S1 gemäß Fig. 2 in die flachere Schneidposition S2 gemäß Fig. 3 werden in Fig. 2 die Schrauben in den Befestigungsstellen 22 und 23 gelockert. Die Schraube in der Befestigungsstelle 23 wird herausgezogen. Die Halteteile H werden in die untere Halteposition gemäß Fig. 3 verschwenkt, ehe die Schrauben in die Befestigungsstellen 24 eingesetzt und angezogen werden. Für diese Verstellung kann ein Schwenkverstellmechanismus benutzt werden, der bei der gezeigten Ausführungsform gleichzeitig der Lösemechanismus für die Eingriffselemente 15 ist.

Die Zugfedern 14 bewirken bei entlastetem Hydraulikzylinder 18 ein Drehmoment an den Messern M entgegen dem Uhrzeigersinn und um die Halteachse X. Dadurch wird der Messerträger T an dem oberen Endanschlag 25b gehalten. Nach lösen der Schrauben in der Befestigungsstelle 23 wird der Hydraulikzylinder 18 beaufschlagt, und zwar gerade so viel, daß er die Eingriffselemente 15 gegen die Kraft der Zugfedern 14 entlastet, so daß ein Drehmoment der Messer M um die Halteachse X im Uhrzeigersinn entsteht. Mit diesem Drehmoment wird der Messerträger T bis an den unteren Endanschlag 25a verstellt. Dann lassen sich die Schrauben in die Befestigungsstellen 24 problemlos einstecken und anziehen, ehe der Hydraulikzylinder 18 wieder entlastet wird.

Umgekehrt wird bei einer Umstellung von der flachen Schneidposition S2 in Fig. 3 in die steile Schneidposition S1 von Fig. 2 zunächst der Hydraulikzylinder 18 beaufschlagt, bis das im Uhrzeigersinn wirkende Drehmoment den Messerträger T gegen den unteren Endanschlag 25a drückt. Dann lassen sich die Schrauben aus den Befestigungsstellen 24 problemlos entnehmen. Durch nachfolgendes Entlasten des Hydraulikzylinders 18 bewirken die Zugfedern 14 ein Drehmoment entgegen dem Uhrzeigersinn, bis der Messerträger T gegen den oberen Endanschlag 25b gezogen ist. Dann lassen sich die Schrauben problemlos in die oberen Befestigungsstellen 23 einsetzen und anziehen. Die Kraft des Hydraulikzylinders 18 bzw. der Zugfedern 14 wird über den Schwenkhebel 20 auf den Messerträger T übertragen, um diesen zwischen den Endanschlägen 25a und 25b hin und her zu schieben. Die Endanschläge 25a und 25b könnten auch in Form von Langlöchern im Schneidrahmen 13 ausgebildet sein.

Es wäre aber auch denkbar, einen eigenen Schwenkverstellmechanismus für die Halteteile H vorzusehen, der unabhängig von dem Lösemechanismus für die Eingriffselemente 11 wirkt und einen mechanischen, hydraulischen oder elektrischen Betätiger hat.

## Patentansprüche

1. Rundballenpresse (R) für Erntegut, mit einem im Zuführweg in die Preßkammer (3) angeordneten Schneidwerk (V), in dem in einem Schneidrahmen (13) mit einem Messerträger (T) mehrere nebeneinanderliegende Messer (M) gehaltert sind, die zwecks Verstellung aus wenigstens einer aktiven Schneidposition in eine Passivposition vom Messerträger (T) lösbar sind, **dadurch gekennzeichnet**, daß die Messer (M) zwischen einer steilen aktiven Schneidposition (S1) und wenigstens einer flacheren aktiven Schneidposition (S2) um eine Halteachse (X) hin- und herverstellbar mit dem Messerträger (T) gehaltert sind.

2. Rundballenpresse nach Anspruch 1, **dadurch gekennzeichnet**, daß in dem Schneidwerk ein um eine quer zum Zuführweg liegende Achse drehantreibbarer Erntegut-Förder-Rotor (2) vorgesehen ist, daß die Messer (M) in der steilen Schneidposition (S1) und auch in der flachen Schneidposition (S2) in kooperativem Eingriff mit dem Rotor (2) sind.

3. Rundballenpresse nach Anspruch 1, **dadurch gekennzeichnet**, daß der Messerträger (T) im Schneidrahmen (13) zwischen wenigstens zwei unterschiedlichen je einer aktiven Schneidposition (S1, S2) der Messer (M) entsprechenden Haltepositionen umstellbar, vorzugsweise schwenkverstellbar, und in beiden Haltepositionen verriegelbar bzw. festlegbar ist.

4. Rundballenpresse nach den Ansprüchen 1 und 3, **dadurch gekennzeichnet**, daß der Messerträger (T) mit einem Schwenkverstellmechanismus gekoppelt ist, der, vorzugsweise einen mechanischen, hydraulischen oder elektrischen Antrieb (18) aufweist.

5. Rundballenpresse nach wenigstens einem der Ansprüche 1 bis 4, **dadurch gekennzeichnet**, daß ein mechanisch, hydraulisch oder elektrisch betätigbarer Lösemechanismus zum gemeinsamen wahlweisen Lösen der Messer (M) vom Messerträger (T) und Koppeln der Messer (M) mit dem Messerträger (T) vorgesehen ist, und daß der Lösemechanismus, zumindest mit einem Teilabschnitt seines Lösehubs, gleichzeitig der Schwenkverstellmechanismus des Messerträgers (T) für die Verstellung der Messer (M) zwischen den beiden Schneidpositionen (S1, S2) ist.

6. Rundballenpresse nach wenigstens einem der Ansprüche 1 bis 5, **dadurch gekennzeichnet**, daß der Messerträger (T) eine den Schneidrahmen (13) quer durchsetzende Achse ist, auf der Federhebel (16) zum Koppeln der Messer (M) mit dem Messerträger (T) gelagert sind, daß die Federhebel (13) durch Federelemente (14) beaufschlagt sind, und daß der Messerträger (T) an im Schneidrahmen (13) schwenkverstellbaren Halteteilen (H) gelagert ist.

7. Rundballenpresse nach wenigstens einem der Ansprüche 1 bis 6, **dadurch gekennzeichnet**, daß beim Befestigungsbereich jedes Halteteils (H) am Schneidrahmen (13) Endanschläge (25a, 25b) zum Grobpositionieren des Messerträgers (T) in zwei die Schneidposition (P1, P2) der Messer (M) definierenden Messerträger-Positionen vorgesehen sind.

8. Rundballenpresse nach Anspruch 7, **dadurch gekennzeichnet**, daß jeder Halteteil (H) an zwei in Verstellrichtung des Messerträgers zwischen seinen Haltepositionen beabstandeten Befestigungsstellen (23, 24) im Schneidrahmen (13) festlegbar ist, und daß die beiden Befestigungsstellen (23, 24) auf die beiden Messerträger-Positionen ausgerichtet sind.

9. Rundballenpresse nach wenigstens einem der Ansprüche 1 bis 8, **dadurch gekennzeichnet**, daß der Verstellwinkel der Messer (M) zwischen der steilen und der flacheren Schneidposition (S1, S2) zwischen etwa 4° und 10°, vorzugsweise bei ca. 6°, und der Verstellwinkel zwischen der steilen Schneidposition (S1) und der Passivposition (P) bei ca. 30° liegt.

10. Schneidwerk (V) für eine Rundballenpresse (R), mit mehreren nebeneinanderliegend in einem Schneidrahmen (13) mit einem Messerträger (T) gehalterten Messern (M), die zwecks Verstellung aus wenigstens einer Schneidposition in eine Passivposition vom Messerträger (T) lösbar sind, **dadurch gekennzeichnet**, daß die Messer (M) innerhalb ihres kooperativen Eingriffs mit einem Erntegut-Förder-Rotor (2) zwischen einer steilen aktiven Schneidposition (S1) und wenigstens einer flacheren aktiven Schneidposition (S2) um eine Halteachse (X) hin- und herverstellbar mit dem Messerträger (T) im Schneidrahmen (13) gehaltert sind.

## Claims

1. Roll baler (R) for harvested material, including a cutting arrangement (V), which is disposed in the feed path to the pressing chamber (3), and in which arrangement are mounted a plurality of adjacently situated blades (M) in a cutting frame (13) provided with a blade carrier (T), said blades being releasable from the blade carrier (T) for the purpose of displacement from at least one active cutting position into an idle position, characterised in that the blades (M) are mounted with the blade carrier (T) so as to be reciprocatable about a retaining axle (X) between a steep active cutting position (S1) and at least one flatter active cutting position (S2).

2. Roll baler according to claim 1, characterised in that a harvested material conveying rotor (2), which is rotatably drivable about an axle extending transversely relative to the feed path, is provided in the cutting arrangement, and in that the blades (M) are in co-operative engagement with the rotor (2) in the steep cutting position (S1) and also in the flat cutting position (S2).

3. Roll baler according to claim 1, characterised in that the blade carrier (T) is adjustable, preferably pivotally displaceable, in the cutting frame (13) between at least two different retaining positions, which each correspond to an active cutting position (S1, S2) of the blades (M), and is lockable, or respectively securable, in both retaining positions.

4. Roll baler according to claims 1 and 3, characterised in that the blade carrier (T) is connected to a pivotal displacement mechanism, which preferably has a mechanical, hydraulic or electric drive (18).

5. Roll baler according to at least one of claims 1 to 4, characterised in that a mechanically, hydraulically or electrically actuatable release mechanism is provided for jointly selectively releasing the blades (M) from the blade carrier (T) and for connecting the blades (M) to the blade carrier (T), and in that the release mechanism, at least with a section of its release movement, is simultaneously the pivotal displacement mechanism of the blade carrier (T) for the displacement of the blades (M) between the two cutting positions (S1, S2).

6. Roll baler according to at least one of claims 1 to 5, characterised in that the blade carrier (T) is an axle which extends transversely through the cutting frame (13), on which axle are mounted resilient levers (16) for connecting the blades (M) to the blade carrier (T), in that resilient members (14) act on the resilient levers (16), and in that the blade carrier (T) is mounted on retaining members (H), which are pivotally displaceable in the cutting frame (13).

7. Roll baler according to at least one of claims 1 to 6, characterised in that end stops (25a, 25b), for roughly positioning the blade carrier (T) in two blade carrier positions defining the cutting position (P1, P2) of the blades (M), are provided in the region where each retaining member (H) is secured on the cutting frame (13).

8. Roll baler according to claim 7, characterised in that each retaining member (H) is securable in the cutting frame (13) at two engagement points (23, 24), which are spaced between its retaining positions when viewed with respect to the direction of displacement of the blade carrier, and in that the two engagement points (23, 24) are aligned with the two blade carrier positions.

9. Roll baler according to at least one of claims 1 to 8, characterised in that the angle of displacement of the blades (M) between the steep cutting position (S1) and the flatter cutting position (S2) is between substantially 4° and 10°, preferably approx. 6°, and the angle of displacement between the steep cutting position (S1) and the idle position (P) is approx. 30°.

10. Cutting arrangement (V) for a roll baler (R), including a plurality of blades (M), which are mounted adjacent one another in a cutting frame (13) provided with a blade carrier (T) and are releasable from the blade carrier (T) for the purpose of displacement from at least one cutting position into an idle position, characterised in that the blades (M) are mounted with the blade carrier (T) in the cutting frame (13), within their co-operative engagement with a harvested material conveying rotor (2), between a steep active cutting position (S1) and at least one flatter active cutting position (S2) so as to be reciprocatable about a retaining axle (X).

## Revendications

1. Presse (R) à ballots ronds pour récoltes, comprenant un mécanisme de coupe (V) situé sur le trajet d'alimentation dans la chambre de presse (3), dans lequel plusieurs couteaux (M) situés les uns à côté des autres sont supportés dans un châssis de coupe (13) grâce à un support de couteaux (T), lesquels couteaux peuvent être déclenchés du support de couteaux (T) en vue du déplacement d'au moins une position de coupe active dans une position passive, caractérisée en ce que les couteaux (M) sont supportés par le support de couteaux (T) d'une manière permettant un déplacement alternatif autour d'un axe d'appui (X) entre une position de coupe active à forte inclinaison (S1) et au moins une position de coupe active à inclinaison plus faible (S2).

2. Presse à ballots ronds selon la revendication 1, caractérisée en ce que l'on prévoit, dans le mécanisme de coupe, un rotor (2) d'alimentation des récoltes pouvant être commandé en rotation autour d'un axe transversal par rapport au trajet d'alimentation, en ce que les couteaux (M) sont en contact coopératif avec le rotor (2) dans la position de coupe à forte inclinaison (S1) et également dans la position de coupe à faible inclinaison (S2).

3. Presse à ballots ronds selon la revendication 1, caractérisée en ce que le support de couteaux (T) peut être déplacé dans le châssis de coupe (13), et de préférence déplacé par pivotement, entre au moins deux positions de support différentes correspondant chacune à une position de coupe active (S1, S2) des couteaux (M), et peut être verrouillé resp. fixé dans les deux positions de support.

4. Presse à ballots ronds selon les revendications 1 et 3, caractérisée en ce que le support de couteaux (T) est couplé à un mécanisme de déplacement pivotant qui comprend, de préférence, une commande (18) mécanique, hydraulique ou électrique.

5. Presse à ballots ronds selon au moins une des revendications 1 à 4, caractérisée en ce que l'on prévoit un mécanisme de déclenchement à commande mécanique, hydraulique ou électrique permettant d'opérer collectivement, de manière facultative, le déclenchement des couteaux (M) du support de couteaux (T) et le couplage des couteaux (M) avec le support de couteaux (T), et en ce que le mécanisme de déclenchement est en même temps, au moins avec un segment partiel de sa course de déclenchement, le mécanisme de déplacement pivotant du support de couteaux (T) pour le déplacement des couteaux (M) entre les deux positions de coupe (S1, S2).

6. Presse à ballots ronds selon au moins une des revendications 1 à 5, caractérisée en ce que le support de couteaux (T) est un axe qui traverse le châssis de coupe (13) de manière transversale et sur lequel sont montés des leviers à ressort (16) servant au couplage des couteaux (M) avec le support de couteaux (T), en ce que les leviers à ressort (13) sont soumis à l'action d'éléments de ressort (14) et en ce que le support de couteaux (T) est monté sur des pièces de support (H) pouvant effectuer un déplacement pivotant dans le châssis de coupe (13).

7. Presse à ballots ronds selon au moins une des revendications 1 à 6, caractérisée en ce que l'on prévoit, dans la zone de fixation de chaque pièce de support (H) sur le châssis de coupe (13), des butées d'extrémité (25a, 25b) pour le positionnement approximatif du support de couteaux (T) dans deux positions de support de couteaux définissant la position de coupe (P1, P2) des couteaux (M).

8. Presse à ballots ronds selon la revendication 7, caractérisée en ce que chaque pièce de support (H) peut être fixée dans le châssis de coupe (13) au niveau de deux points de fixation (23, 24) présentant une distance dans la direction de déplacement du support de couteaux entre ses positions de support et en ce que les deux points de fixation (23, 24) sont orientés vers les deux positions de support de couteaux.

9. Presse à ballots ronds selon au moins une des revendications 1 à 8, caractérisée en ce que l'angle de déplacement des couteaux (M) entre la position de coupe à forte inclinaison et la position de coupe à faible inclinaison (S1, S2) mesure à peu près entre 4° et 10°, de préférence environ 6°, et l'angle de déplacement entre la position de coupe à forte inclinaison (S1) et la position passive (P) mesure environ 30°.

10. Mécanisme de coupe (V) pour une presse (R) à ballots ronds, comprenant plusieurs couteaux (M) supportés les uns à côtés des autres dans un châssis de coupe (13) grâce à un support de couteaux (T), lesquels couteaux peuvent être déclenchés du support de couteaux (T) en vue du déplacement d'au moins une position de coupe dans une position passive, caractérisé en ce que les couteaux (M) sont supportés dans le châssis de coupe (13) grâce au support de couteaux (T), tout en maintenant leur contact coopératif avec un rotor (2) d'alimentation des récoltes, d'une manière permettant un déplacement alternatif autour d'un axe d'appui (X) entre une position de coupe active à forte inclinaison (S1) et au moins une position de coupe active à inclinaison plus faible (S2).
